# DEMANDE DE BREVET EUROPEEN

(11) **EP 0 592 272 A1**
(43) Date de publication de la demande: **13.04.1994**
(21) Numéro de dépôt: 93402342.5
(22) Date de dépôt: 24.09.1993
(51) Int. Cl.: B62D 1/18, B60N 2/44, B62D 31/00

(54) **Colonne de direction de véhicule, partiellement mobile entre une position d'utilisation et une position escamotée**

(30) Priorité: 05.10.1992 FR 9211772
(71) Demandeur: HOBBYCAR S.A., F-41400 Thenay (FR)
(72) Inventeur: Wardavoir, François, F-41120 Cellettes (FR)

(57) **Abrégé**

Une partie (1, 2, 3, 4, 5, 6, 7) de la colonne comprenant le volant (1) est mobile entre une position d'utilisation et une position escamotée dans laquelle la colonne de direction occupe un volume réduit de l'habitacle du véhicule. Le siège du conducteur du véhicule comprend un dossier dont une partie est mobile entre une position de service et une position inclinée vers l'avant.

La colonne de direction comprend des moyens de liaison (16, 17, 19, 9, 12) la reliant à la partie mobile dudit dossier et permettant de commander le déplacement de la partie mobile (1, 2, 3, 4, 5, 6, 7) de la colonne de direction par la manoeuvre de la partie mobile dudit dossier.

Utilisation notamment pour les véhicules découverts.

## Description

La présente invention vise une colonne de direction de véhicule, une partie de cette colonne, comprenant le volant, étant mobile entre une position d'utilisation et une position escamotée.

Il est connu de munir certains véhicules automobiles, par exemple des véhicules sportifs, d'une colonne de direction pouvant, lorsque le véhicule n'est pas utilisé, être déplacée ou repliée de façon à occuper un volume réduit de l'habitacle. Une colonne de ce type est notamment décrite dans le brevet français n° 2 620 395 en date du 6 juillet 1990 au nom du présent demandeur, qui vise un véhicule de plein air à dossiers de sièges rabattables.

Le principe d'une colonne de direction escamotable étant connu, de nombreux problèmes de mise en oeuvre restent posés ou n'ont pas été résolus de façon satisfaisante.

La manoeuvre manuelle directe de la colonne est souvent malaisée tant pour le guidage du mouvement de la colonne que pour la longueur de la course et la position finale escamotée de la colonne. De plus, la possibilité d'escamoter la colonne ne doit pas entamer la précision et la facilité de maniement normal de celle-ci en position d'utilisation pour diriger le véhicule.

Pour répondre à tous ces impératifs, la présente invention propose une colonne de direction de véhicule, une partie de cette colonne comprenant le volant étant mobile entre une position d'utilisation et une position escamotée dans laquelle la colonne de direction occupe un volume réduit de l'habitacle du véhicule, le siège du conducteur du véhicule comprenant un dossier dont une partie est mobile entre une position de service et une position sensiblement inclinée vers l'avant.

Selon l'invention, la colonne de direction est reliée à la partie mobile dudit dossier par des moyens de liaison permettant de commander le déplacement de la partie mobile de la colonne de direction par la manoeuvre de la partie mobile dudit dossier.

On rend ainsi le mouvement de la colonne de direction dépendant du mouvement de la partie mobile du dossier du siège. De la sorte, le guidage de la colonne est contrôlé et la position finale de celle-ci est invariable.

De plus, le rabattement de la partie mobile du dossier du siège s'effectue en général sans effort, par l'utilisation de la force de gravité en laissant tomber vers l'avant la partie mobile du dossier. L'invention permet donc d'utiliser une partie de cette même force pour escamoter la colonne sans aucun effort.

Suivant une version avantageuse de l'invention, lesdits moyens comprennent un élément du tableau de bord du véhicule, cet élément étant escamotable et solidaire de la partie escamotable de la colonne.

Ainsi on place conjointement en position escamotée une partie de la colonne de direction et un élément du tableau de bord, lequel se trouve ainsi protégé, notamment des chocs.

D'autres caractéristiques et avantages de l'invention apparaîtront encore dans la description qui va suivre, d'une réalisation de l'invention, considérée conjointement aux dessins annexés à titre d'exemples non-limitatifs et dans lesquels :
- la figure 1 est une vue en élévation de la colonne de direction selon l'invention et d'une partie du tableau de bord du véhicule ;
- la figure 2 est une vue de dessus du dispositif de la figure 1.

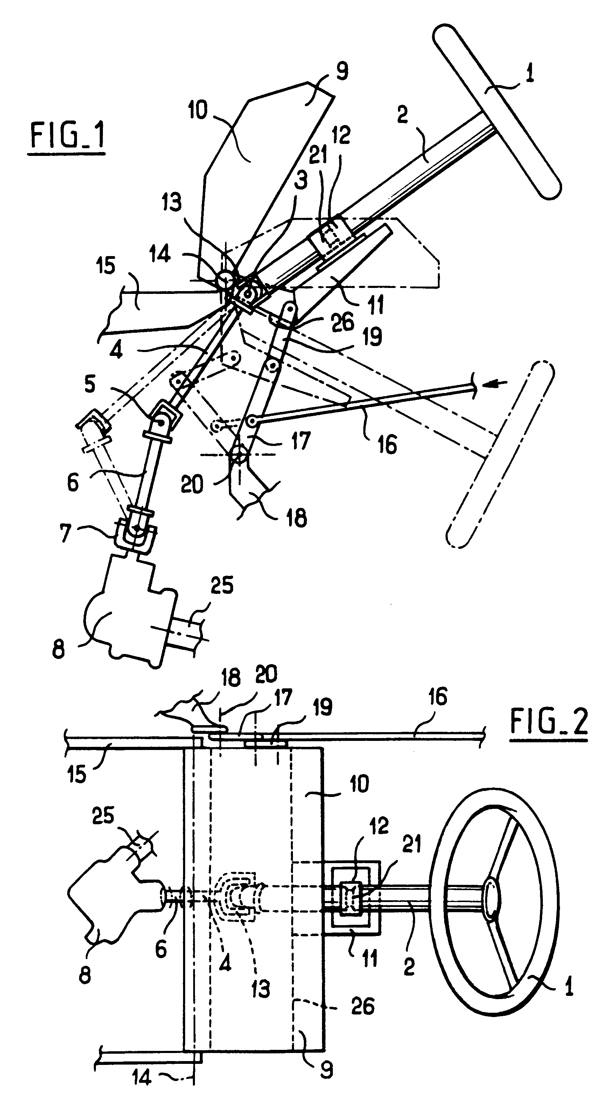

La colonne de direction selon l'invention est prévue pour un véhicule automobile. Sur les figures 1 et 2 elle comprend un volant 1 de forme circulaire classique rigidement fixé à l'extrémité d'une barre 2 reliée par son autre extrémité à un premier joint de cardan 3.

Le joint 3 transmet le mouvement rotatif du volant 1 à une broche supérieure 4 reliée à un deuxième joint de cardan 5. Celui-ci transmet ledit mouvement à une broche inférieure 6 qui est à son tour reliée à un troisième joint de cardan 7. Par l'intermédiaire de celui-ci, le mouvement rotatif aboutit à l'engrenage 8 non détaillé sur les figures, qui renvoie le mouvement en direction d'un mécanisme non représenté, relié à la crémaillère gouvernant l'orientation des roues du véhicule. Les éléments de la colonne situés au dessus de l'engrenage 8 peuvent être sensiblement situés dans un même plan vertical parallèle à l'axe longitudinal du véhicule.

La partie de la colonne de direction située au dessus du joint de cardan 7, à savoir le volant 1, la barre 2, les broches 4 et 6 et les joints de cardan 3 et 5, est escamotable, c'est-à-dire est mobile entre une position d'utilisation et une position escamotée dans laquelle la colonne de direction occupe un volume réduit de l'habitacle du véhicule.

Le support de l'engrenage 8 est fixé rigidement au châssis du véhicule.

Par ailleurs, la barre 2 est reliée à un élément 9 du tableau de bord du véhicule. Cet élément 9 comprend une coquille 10 rectangulaire allongée dont les grands bords sont perpendiculaires au plan vertical de la colonne de direction. Des cadrans et voyants de contrôle ou des boutons de commande liés à différentes fonctions du véhicule peuvent être disposés à l'intérieur de la coquille 10 ou sur celle-ci, dans la zone de visibilité du conducteur.

Sur l'un des grands bords inférieurs de la coquille 10 se trouve un prolongement coudé faisant corps avec la coquille 10 et s'étendant sensiblement en dessous de celle-ci. Ce prolongement est constitué d'une portion large 26 et d'une portion étroite 11.

La liaison de la barre 2 avec la portion étroite 11 est effectuée grâce à une pièce 12 en forme de demi-tube qui enserre la barre 2 et maintient celle-ci contre la surface de la portion étroite 11 de sorte que la barre 2 est libre en rotation suivant l'axe du demi-tube pour transmettre les mouvements imprimés au volant par le conducteur. A l'intérieur de la pièce 12 une butée non représentée est engagée dans un évidement annulaire 21 pratiqué sur le pourtour de la barre 2 afin d'empêcher la translation de celle-ci.

Un orifice 13 est pratiqué dans la portion large 26 permettant le passage de la colonne de direction à travers l'élément 9 à peu près au niveau du joint de cardan 3.

L'élément 9 est articulé en rotation autour de l'axe 14 perpendiculaire au plan vertical de la colonne de direction à un élément fixe 15 de l'habitacle du véhicule.

Au moyen de cet axe 14 et de la liaison avec la barre 2, l'élément 9 est solidaire de la partie escamotable de la colonne.

Le dossier du siège du conducteur comporte, comme cela est courant, une partie supérieure mobile entre une position de service dans laquelle le conducteur peut s'asseoir sur le siège et une position dans laquelle ladite partie mobile est rabattue à l'horizontale vers l'avant. Un tel siège figure dans le brevet français précité.

Une tringle 16 est articulée en rotation à l'armature de cette partie mobile sur le côté droit de celle-ci, c'est-à-dire du côté de l'axe longitudinal médian du véhicule. La tringle 16 est aussi articulée à la partie centrale d'une première biellette 17. Par une extrémité, celle-ci est articulée en rotation autour de l'axe 20 à un élément fixe 18 de l'habitacle. Par son autre extrémité, la biellette 17 est articulée à l'extrémité d'une seconde biellette 19. L'autre extrémité de la biellette 19 est articulée en rotation au côté droit de la portion large 20 de l'élément 9.

Comme on le voit sur la figure 2, la tringle 16 se trouve sur la droite du conducteur. Elle ne gène donc en rien sa liberté de mouvement, que ce soit pour conduire le véhicule ou pour rentrer et sortir de celui-ci.

La présente réalisation de l'invention s'applique particulièrement à un véhicule automobile découvert dont l'habitacle comporte quatre emplacements de passager, comme cela figure dans le brevet français n° 2 620 395 précité. Dans ce dernier, l'arrière de la partie mobile du dossier de chaque siège forme une porte venant obturer la partie supérieure de l'emplacement de passager lorsque cette partie mobile est rabattue à l'horizontale.

Le dispositif selon l'invention fonctionne de la façon suivante.

Les points fixes constituant les axes de rotation du mécanisme d'escamotage sont le joint de cardan 7, l'axe 14 et l'axe 20, tous deux parallèles et coplanaires.

On suppose que le siège du conducteur est en position de service, c'est-à-dire que la partie mobile du dossier est sensiblement verticale. La colonne de direction est en position d'utilisation. Cette situation est représentée en traits pleins sur la figure 1.

Les déplacements qui vont maintenant être décrits ont lieu simultanément. Pour escamoter la colonne de direction, on bascule vers l'avant du véhicule, à l'horizontale, la partie mobile du dossier du siège. Sur la figure 1, cela provoque le déplacement vers la gauche de la tringle 16 et la rotation de la biellette 17 dans le sens anti-horaire. Celle-ci entraîne la biellette 19 et provoque la rotation de l'élément 9 dans le sens horaire, autour de l'axe 14. La barre 2 et le volant 1 sont entraînés dans le même mouvement de rotation autour de l'axe 14. La broche 4 est poussée vers l'avant du véhicule et la broche 6 se déplace en rotation autour du joint de cardan 7. La situation des pièces en position escamotée est représentée en traits pointillés sur la figure 1.

La barre 2 et le volant 1 ne sont donc plus visibles en partie supérieure du véhicule. De plus, la coquille 10 de l'élément 9 du tableau de bord est rabattue à l'horizontale, protégeant des impacts les éléments dont est munie sa partie intérieure.

La mise en position escamotée de la colonne de direction et de l'élément 9 a lieu en un instant et sans effort. En effet, il suffit pour cela de basculer vers l'avant la partie mobile du dossier du siège. La manoeuvre dure le temps de la chute de cette partie mobile vers l'avant. Les forces nécessaires au déplacement de la colonne et de l'élément 9 sont fournies par le poids de cette partie mobile basculant vers l'avant.

Pour replacer la colonne de direction et l'élément 9 en position d'utilisation, il suffit de relever la partie mobile du dossier du siège. Toutes les pièces reviennent alors dans leur position initiale en parcourant leur trajectoire dans le sens inverse.

La colonne selon l'invention permet donc de placer la colonne de direction et l'élément 9 en position d'utilisation ou en position escamotée, instantanément et sans effort. La manoeuvre manuelle de la colonne n'étant pas directe mais s'effectuant par l'intermédiaire d'un mécanisme, celle-ci est à chaque fois placée précisément dans la position optimale.

Conjointement à ces avantages, la course verticale de la barre 2 et du volant 1 est très importante et libére un volume considérable en partie supérieure du véhicule.

Dans le cas du véhicule décrit dans le brevet français n° 2 620 395 précité, une fois la colonne de direction escamotée et les parties mobiles des dossiers des sièges rabattues pour clore les emplacements de passagers, on dispose en partie supérieure du véhicule d'un large plancher de chargement.

De nombreuses modifications et améliorations pourront être apportées à l'invention sans sortir du cadre de celle-ci. On pourra par exemple modifier la liaison entre la partie mobile du dossier du siège et la colonne de direction ou encore varier le nombre et la forme des pièces mobiles de la colonne de direction.

## Revendications

1. Colonne de direction de véhicule, une partie (1, 2, 3, 4, 5, 6, 7) de cette colonne, comprenant le volant (1), étant mobile entre une position d'utilisation et une position escamotée dans laquelle la colonne de direction occupe un volume réduit de l'habitacle du véhicule, le siège du conducteur du véhicule comprenant un dossier dont une partie est mobile entre une position de service et une position inclinée vers l'avant, caractérisée en ce que la colonne de direction comprend des moyens de liaison (16, 17, 19, 9, 12) la reliant à la partie mobile dudit dossier et permettant de commander le déplacement de la partie mobile (1, 2, 3, 4, 5, 6, 7) de la colonne de direction par la manoeuvre de la partie mobile dudit dossier.

2. Colonne de direction conforme à la revendication 1, caractérisee en ce que lesdits moyens (16, 17, 19, 9, 12) comprennent un élément (9) du tableau de bord du véhicule, cet élément (9) étant escamotable et solidaire de la partie mobile (1, 2, 3, 4, 5, 6, 7) de la colonne.

3. Colonne de direction conforme à la revendication 2, caractérisée en ce que ledit élément (9) du tableau de bord est articulé en rotation à un élément fixe (15) de l'habitacle.

4. Colonne de direction conforme à l'une des revendications 2 ou 3, caractérisée en ce que lesdits moyens (16, 17, 19, 9, 12) comprennent également une tringle (16) dont une première extrémité est articulée en rotation à la partie mobile dudit dossier, une premiére biellette (17) reliée à la seconde extrémité de ladite tringle (16) et articulée en rotation à un élément fixe (18) de l'habitacle et une deuxième biellette (19) articulée à la première biellette (17) et audit élément (9) du tableau de bord.

5. Colonne de direction conforme à l'une des revendications 1 à 4, caractérisée en ce que ladite position sensiblement inclinée vers l'avant est une position horizontale.

6. Colonne de direction conforme à l'une des revendications 1 à 5, caractérisée en ce que la face arrière de la partie mobile dudit dossier constitue une porte venant obturer la partie supérieure d'un emplacement de passager lorsque la partie mobile dudit dossier est placée dans la position sensiblement inclinée vers l'avant.
